# FASCICULE DE BREVET EUROPEEN

(11) **EP 3 392 086 B1**
(45) Date de publication et mention de la délivrance du brevet: **08.01.2020**
(21) Numéro de dépôt: 18167331.0
(22) Date de dépôt: 13.04.2018
(51) Int. Cl.: B60P 7/08

(54) **AGENCEMENT D'ANNEAU D'ARRIMAGE SUR UNE STRUCTURE DE SUPPORT TEL QUE LE BORD DE RIVE OU UN PLANCHER NOTAMMENT DE CHARGEMENT D'UN VÉHICULE DE TRANSPORT**
RINGFÖRMIGE FESTZURRANORDNUNG AUF EINER HALTESTRUKTUR, WIE EINE EINFASSUNG ODER EINEM BODEN, INSBESONDERE ZUM BELADEN EINES TRANSPORTFAHRZEUGS
ARRANGEMENT OF A SECURING RING ON A SUPPORTING STRUCTURE SUCH AS THE BANK EDGE OR A FLOOR, IN PARTICULAR FOR LOADING A TRANSPORT VEHICLE

(30) Priorité: 18.04.2017 FR 1753328
(43) Date de publication de la demande: 24.10.2018
(73) Titulaire: Pommier, 95310 Saint Ouen l'Aumone (FR)
(72) Inventeur: CAUBEL, Laurent, 95270 LUZARCHES (FR); AUBIGNAT, Frédéric, 60660 CIRES LES MELLO (FR)
(74) Mandataire: Berger, Helmut

(56) Documents cités:
- EP-A2- 2 607 162
- DE-A1- 19 806 448
- JP-A- 2012 041 016

## Description

L'invention concerne un agencement d'anneau d'arrimage sur une structure de support tel que le bord de rive ou un plancher notamment de chargement d'un véhicule de transport dans lequel l'anneau, est retenu dans la structure de support par sa partie opposée à la partie d'accrochage d'un moyen d'arrimage tels qu'une sangle ou une chaîne.

Les agencements d'anneau d'arrimage de ce type, qui sont connus (par ex. de JP 2012-41016 A), présentent l'inconvénient majeur que leur mise en place sur la structure de support est complexe et difficile à mettre en œuvre.

L'invention a pour but de pallier cet inconvénient.

Pour atteindre ce but, le système d'anneau d'arrimage selon l'invention est caractérisé en ce que l'anneau d'arrimage comporte un élément d'accrochage en forme d'un U ayant des branches dont les extrémités libres passent à travers des trous pratiqués dans une partie de la structure de support, et un élément de liaison des deux extrémités, qui est adapté pour être monté et verrouillé sur les extrémités ayant traversées la partie de la structure de support.

Selon une caractéristique de l'invention, l'agencement est caractérisé en ce que l'élément de liaison est formé par une plaquette pourvue de moyens de verrouillage de la plaquette sur les extrémités de l'élément d'accrochage en forme de U.

Selon une autre caractéristique de l'invention, l'agencement est caractérisé en ce que la plaquette comporte, pour chaque extrémité de l'élément d'accrochage une échancrure de retenue de la plaquette sur les extrémités et des moyens de verrouillage de la plaquette dans les échancrures.

Selon encore une autre caractéristique de l'invention, l'agencement est caractérisé en ce que l'extrémité de chaque branche de l'élément d'accrochage se termine par une partie en forme d'une tête et une partie d'épaisseur réduite devant la tête et en ce que chaque échancrure comprend une partie permettant le passage de la tête et, en communication avec cette partie, une portion oblongue de réception et de retenue de la partie d'épaisseur réduite de l'extrémité et en ce que le moyen de verrouillage est configuré pour bloquer l'extrémité dans la partie d'échancrure oblongue.

Selon encore une autre caractéristique de l'invention, l'agencement est caractérisé en ce que le moyen de verrouillage comprend un élément de butée latérale de l'extrémité d'une branche de l'élément d'accrochage, ayant traversé son échancrure, pour empêcher le retour de cette extrémité dans la partie de passage de la tête.

Selon encore une autre caractéristique de l'invention, l'agencement est caractérisé en ce que le moyen de verrouillage est formé par une épingle montée sur la plaquette par une extrémité, déformable contre une force de rappel, entre une position de verrouillage de la tête et une position permettant le passage de cette tête à travers la partie de passage de l'échancrure et le passage par un mouvement en translation latérale de la partie d'épaisseur réduite de l'extrémité dans la partie d'échancrure oblongue, la butée étant formée par l'extrémité libre de l'épingle.

Selon encore une autre caractéristique de l'invention, l'agencement est caractérisé en ce que le moyen de verrouillage est formé par une épingle bistable, adaptée pour pivoter entre sa position de verrouillage et sa position permettant le passage de la tête à verrouiller.

Selon encore une autre caractéristique de l'invention, l'agencement est caractérisé en ce que le moyen de verrouillage est formé par une lame élastiquement déformable, qui est montée déformable entre sa position de verrouillage et une position permettant le passage de la tête à verrouiller à travers la portion de passage de l'échancrure, cette lame étant montée fixe sur la plaquette, par une extrémité, tandis que l'autre extrémité comporte le moyen de butée.

L'invention sera mieux comprise, et d'autres buts, caractéristiques, détails et avantages de celle-ci apparaîtront plus clairement dans la description explicative qui va suivre faite en référence aux dessins annexés donnés uniquement à titre d'exemple illustrant plusieurs modes de réalisation de l'invention et dans lesquels :
- la figure 1 est une vue en perspective de l'agencement d'anneau d'arrimage selon l'invention ;
- la figure 2 est une vue en perspective selon la flèche II de l'agencement de la figure 1 ;
- les figures 3A à 3C sont des vues en perspective d'un premier mode de réalisation d'un anneau d'arrimage selon l'invention, montrant celui-ci en trois situations différentes, c'est-à-dire avant, pendant et après le montage de l'élément de liaison en forme d'une plaquette sur les extrémités libres de l'élément en forme d'un U de l'anneau d'arrimage ;
- les figures 3E et 3D sont des vues respectivement de dessous et latérale de la plaquette verrouillable des figures 3A à 3C ;
- les figures 4A à 4C sont trois vues en perspective d'un second mode de réalisation de l'anneau d'arrimage selon l'invention, correspondant aux figures 3A à 3C ;
- les figures 4D et 4E sont des vues en respective en vue des flèches IVD et IVE de la plaquette selon la figure 4A ;
- les figures 5A à 5C sont des vues en perspective d'un troisième mode de réalisation d'un anneau d'arrimage selon l'invention, montrant celui-ci dans les trois situations des figures 3A à 3C ;

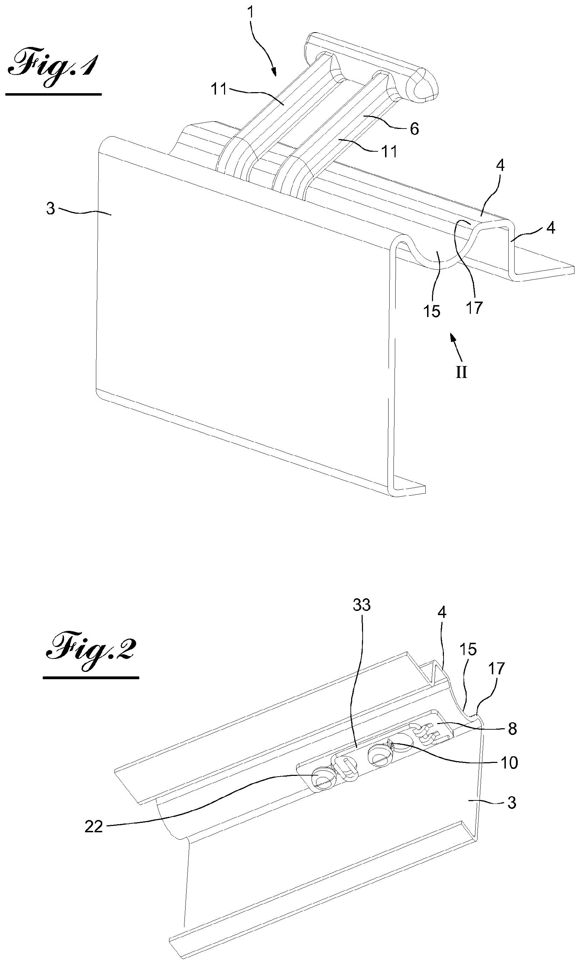

L'invention sera décrite ci-après, à titre d'exemple non limitatif, dans sa mise en oeuvre représentée aux figures 1 et 2. Ces figures montrent un anneau d'arrimage 1 monté sur une structure de support 3 formée, dans l'exemple représenté, par un profilé en U dont la branche supérieure 4 est configurée pour permettre le montage et la fixation de l'anneau 1 sur ce profil qui pourrait faire partie du bord de rive ou d'un plancher de chargement d'un véhicule de transport.

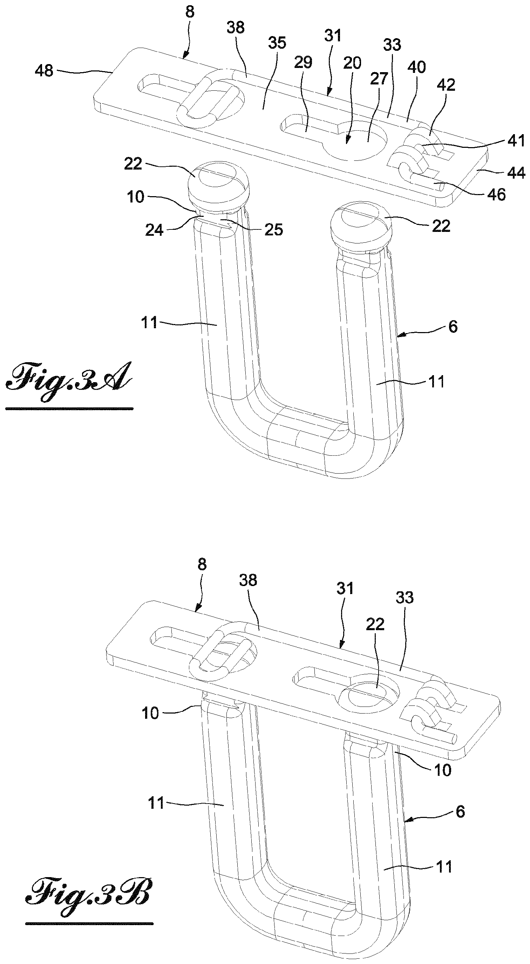

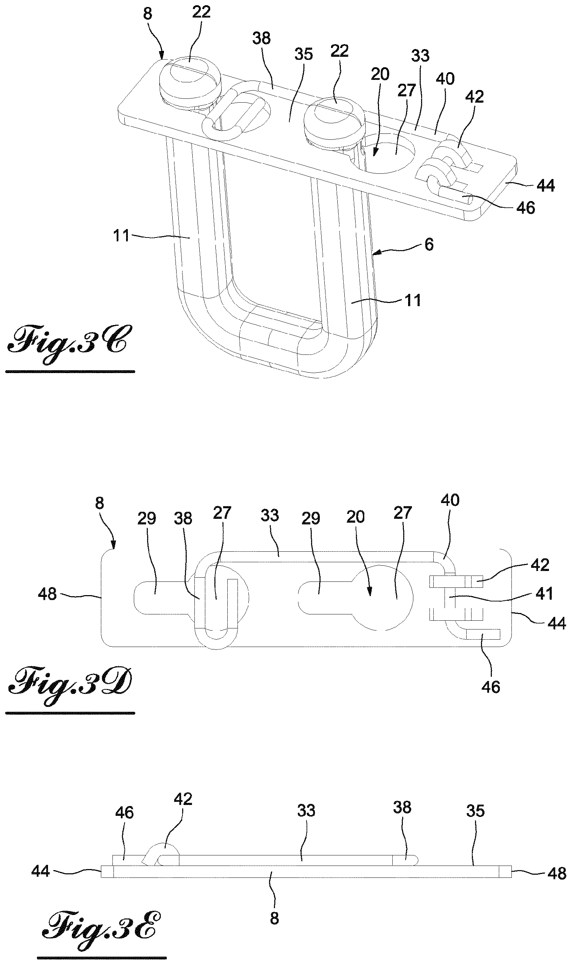

Comme il ressort des figures, un anneau d'arrimage 1 selon l'invention se compose de deux éléments, à savoir d'un premier élément 6 d'accrochage d'un moyen d'arrimage tel qu'une sangle ou une chaîne, qui présente la forme générale d'un U et d'un deuxième élément 8 de liaison des extrémités 10 de l'élément d'anneau 6. L'élément de liaison 8 est adapté pour être monté sur ces extrémités et est verrouillable sur celles-ci. Les termes "ayant la forme générale d'un U, à propos de l'élément d'accrochage couvrent un élément en forme d'un U spécifique, conformément aux figures 3A à 3E et l'élément représenté sur les autres figures en forme d'un π.

En se référant aux figures 1 et 2, on voit que les extrémités 10 de l'élément d'anneau 6 sont destinées à traverser la paroi de la branche supérieure 4 du profilé 3 et l'élément de liaison 8 est ensuite monté et verrouillé sur ces extrémités de la manière qui sera décrite ci-après. Plus précisément, la branche supérieure 4 du profilé 3 présente une gorge 15 dont le fond est traversé par les trous de passage des extrémités 10 de l'élément d'anneau 6 et l'élément de liaison 8 prend appui sur la face extérieur convexe de la gorge. La partie inférieure des branches de l'élément d'anneau 6 est arrondie de façon complémentaire au bord arrondi 17 de la gorge pour assurer l'appui des branches sur le profilé.

Comme le montre clairement les figures, l'élément de liaison 8 de l'anneau d'arrimage 1 est en forme d'une plaquette qui comporte deux échancrures 20, chacune pour la réception d'une extrémité 10 de l'élément d'anneau d'accrochage 6. Concernant les deux extrémités 10, chacune est réalisée sous forme d'une excroissance en forme d'une tête 22 à section transversale circulaire, qui fait saillie au-delà des faces des branches 11 de l'élément d'anneau. Juste devant la tête 22 chaque extrémité présente, sur chaque face latérale dans le plan du U, un creux 24 dont le fond s'étend parallèlement au plan du U, de façon à laisser subsister une portion de branche d'épaisseur réduite mais constante 25.

Les deux échancrures 20 de la plaquette 8 destinées à être montées et verrouillées sur les extrémités 10 de l'élément d'anneau 6 présentent une forme adaptée à l'extrémité 10 qu'elle doit recevoir. A cette fin, chaque échancrure comporte une partie circulaire 27 dont le diamètre est légèrement supérieur au diamètre de la tête 22 de l'extrémité 10 à recevoir de façon que cette tête puisse traverser cette partie circulaire 27, et une partie oblongue 29 dont les bords sont parallèles et écartés l'un de l'autre d'une distance légèrement supérieure à l'épaisseur de la partie subsistante 25 des creux 24. Chaque partie oblongue 29 s'étend dans la direction de l'axe longitudinal de la plaquette et s'ouvre dans la partie circulaire 27. Les deux échancrures 20 de la plaquette 8 sont prévues dans celle-ci à une distance qui correspond à l'écart entre les deux têtes 22 de l'élément d'anneau 6 de façon que ces têtes puissent être introduites dans les parties circulaires 27 et passer à travers celles-ci. Les figures 3B, 4B et 5B montrent les têtes engagées dans les parties circulaires 27 des échancrures, tandis que les figures 3C, 4C et 5C montrent ces extrémités après avoir traversées ces parties 27 d'une distance permettant aux creux 24 d'être en face des parties oblongues 29 des échancrures. Etant donné les dimensions de la partie restante 25 des creux et la largeur des parties oblongues, on fait glisser les parties 25 de l'élément d'anneau 6 dans les parties oblongues 29 de l'échancrure pour que les extrémités 10 de l'élément d'anneau 6 occupent ces positions des figures 3C, 4C et 5C. La plaquette est pourvue de moyens de verrouillage 31,72,50 des extrémités 10 dans cette position.

Les figures 3A à 3E illustrent un premier mode de réalisation de ces moyens de verrouillage. Dans le mode de réalisation, les moyens de verrouillage 31 comprennent une épingle élastique 33 qui s'étend sur la surface supérieure 35 de la plaquette en étant en appui sur celle-ci. Une extrémité 40 de cette épingle est montée sur la surface 35 de la plaquette de façon que la plaquette puisse pivoter de sa position montrée sur les figures, dans laquelle l'autre extrémité 38 est en appui sur la face supérieure 35 au niveau de la partie circulaire 27 d'une échancrure, autour de son extrémité 40 avec rappel dans sa position d'appui. A cette fin, cette extrémité 40 est configurée pour présenter la forme d'un Z dont la partie médiane 41 s'étend perpendiculairement à l'axe longitudinal de la plaquette et est maintenue plaquée sur la surface 35 de celle-ci par deux pattes de retenue 42 qui font saillie perpendiculairement de la face 35 et présentent chacune au niveau de cette surface un trou de passage de la partie épingle 41. Ces pattes sont disposées entre l'échancrure 20 et l'extrémité adjacente 44 de la plaquette. La branche libre 46 de l'extrémité en Z 40 s'étend, parallèlement à l'axe longitudinal de la plaquette en direction de l'extrémité libre de cette dernière et constitue le moyen de rappel de l'épingle 33 dans sa position d'appui sur la face 35 de la plaquette, au niveau de la partie circulaire 27 de l'échancrure 20 près de l'extrémité opposée 48 de la plaquette. L'extrémité d'appui 38 est recourbée de façon à améliorer l'appui et l'effet de butée.

Les figures 3A à 3C illustrent le montage et le verrouillage de la plaquette 8 sur les extrémités 10 de l'élément d'anneau d'accrochage 6. Tout d'abord on place la plaquette dans la position de la figure 3B dans laquelle les têtes 22 sont engagées dans les portions d'échancrure circulaire 27, avec une tête en butée contre l'extrémité d'appui 38 de l'épingle 33. Puis on pousse la plaquette 31 en translation jusqu'à ce que les creux 24 se trouvent en face des portions d'échancrure oblongues 29 en faisant pivoter l'épingle 21 autour de son axe de pivotement 41 à l'encontre de la force de rappel produite par sa branche libre 46. Dans cette position la plaquette est déplacée dans sa direction axiale de façon que les parties d'épaisseur réduites 25 formées par les creux 24 des extrémités 10 soient engagées dans les parties d'échancrure oblongues 29. Comme le montre la figure 3C, l'extrémité 38 de l'épingle n'étant plus en appui sur la tête correspondante 22 de l'élément d'anneau 6, cette épingle revient dans sa position plaquée contre la face 35 de la plaquette dans laquelle cette extrémité empêche, en formant une butée latérale pour la tête 22 correspondante, tout mouvement en arrière des têtes 22 vers leur position d'engagement dans les parties circulaires 27 des échancrures. Par conséquent, la plaquette se trouve ainsi verrouillée sur les extrémités 10 de l'élément d'anneau 6. Le déverrouillage de la plaquette nécessite l'application d'une force qui fait pivoter l'épingle suffisamment en arrière, à l'encontre de la force de rappel produite par l'autre extrémité de l'épingle, d'un angle approprié pour permettre le passage des têtes 22 dans les parties d'échancrure circulaire 27.

En se reportant aux figures 1 et 2, on comprend que le montage de l'anneau d'arrimage 1 sur le profilé de support 3 nécessite seulement de faire passer les extrémités libres des branches de l'élément d'anneau 6 à travers les trous de passage dans la branche supérieure 4 du profilé et de mettre ensuite en place la plaquette 8 de la manière qui vient d'être décrite.

Le montage des deux autres modes de réalisation de l'anneau d'arrimage selon l'invention sur le profilé se fait de la même manière puisque ces modes de réalisation se distinguent seulement par la configuration des moyens de verrouillage 31.

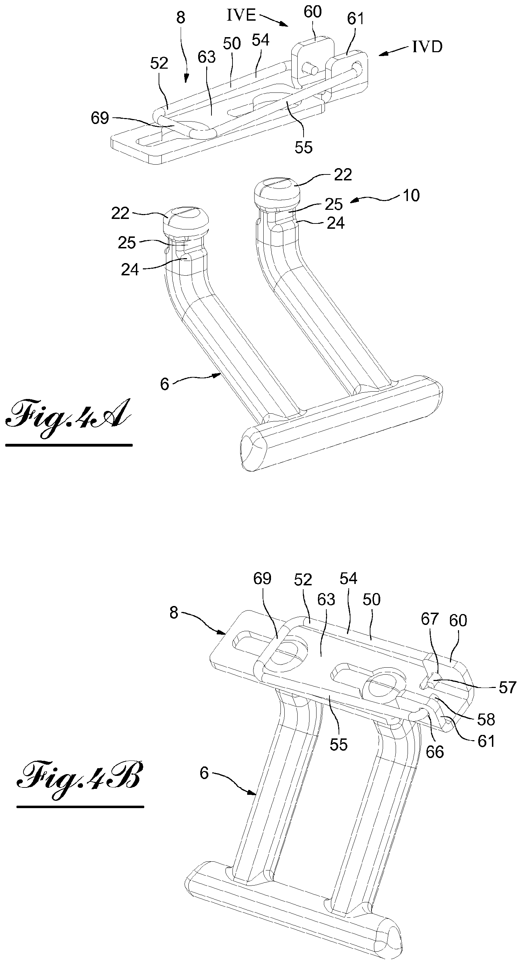

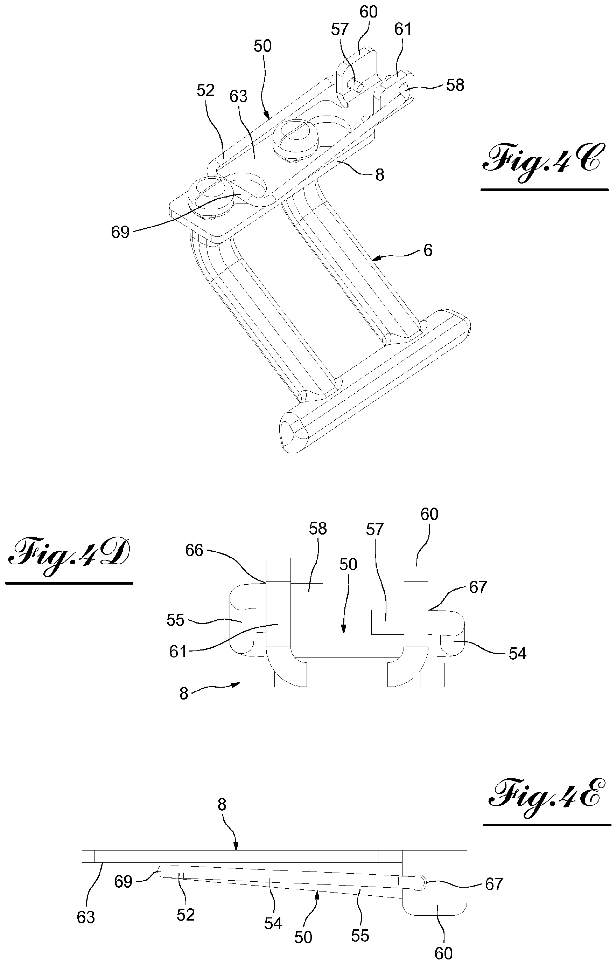

Dans le mode de réalisation selon les figures 4A à 4E, les moyens de verrouillage comprennent également une épingle maintenant notée 50 qui est en appui par une extrémité 52, comme dans le cas de l'épingle 33 sur la plaquette au niveau de la partie circulaire 27 d'une échancrure. Mais l'épingle 50 est maintenant réalisée sous forme d'une épingle bistable, susceptible de pivoter de sa position de verrouillage illustrée dans une position stable de désengagement de la plaquette. A cette fin, l'épingle présente la forme d'un U dont les branches 54, 55 présentent des longueurs différentes et sont retenues par leurs extrémités recourbées respectivement 57, 58 chacune dans une patte respectivement 60, 61 qui fait saillie de la face supérieure extérieure 63 de la plaquette. Comme il ressort des figures 4A à 4E, l'extrémité 58 de la branche plus longue 55 est engagée dans un trou 66 de sa patte 61, qui est décalé par rapport au trou 67 de l'extrémité 57 de la branche plus courte 54, de façon à être plus éloigné de l'échancrure adjacente 20, dans l'axe longitudinal de la plaquette, et dans la direction de la hauteur à partir de la surface 63. Ce sont ces décalages des positions des trous d'ancrage des extrémités qui assurent la stabilité des positions de verrouillage de la plaquette sur les extrémités 10 de l'élément d'anneau 6 et la position dégagée. Comme dans le mode de réalisation précédent, le verrouillage est assuré par l'extrémité libre 52 de l'épingle 50, qui, dans ce cas, est formé par la partie de sommet 69 de celle-ci.

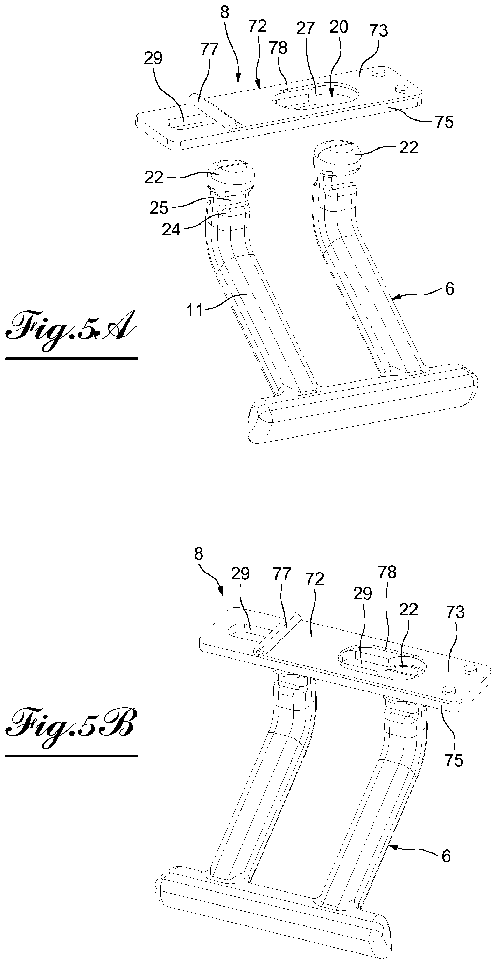

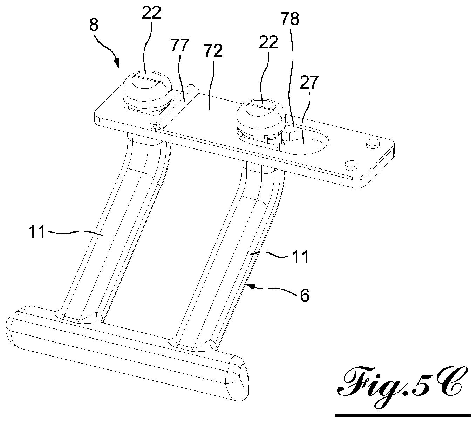

Le mode de réalisation des figures 5A à 5E se distingue des autres modes de réalisation par l'élément élastique de verrouillage 31 de la plaquette sur les extrémités de l'élément d'anneau d'accrochage 6. Dans ce mode de réalisation les moyens de verrouillage sont formés par une lame élastique 72 qui est fixée par une extrémité 73 sur une extrémité 75 de la plaquette et dont l'autre extrémité 77 est recourbée pour former une butée de verrouillage pour la tête 22 de l'élément d'anneau 6 qui est éloignée de l'extrémité de fixation. La lame comprend au niveau de l'autre tête d'extrémité une découpe en forme d'un trou oblong 78 dont la largeur est légèrement supérieure au diamètre de la tête 22 pour permettre le passage de celle-ci, tandis que la longueur est choisie pour permettre l'engagement de l'extrémité dans la partie oblongue 29 de l'échancrure 20. Pour assurer la mise en place de la plaquette 8 sur les extrémités 11 de l'élément d'anneau 6, de lame 72 est susceptible d'être repoussée de sa position de butée pour permettre le passage de la tête correspondant à travers la partie circulaire 27 de l'échancrure et de revenir ensuite dans sa position appliquée de butée après le passage de la tête dans sa position dans la partie oblongue de cette échancrure, conformément à la figure 5C.

Il ressort de la description de l'invention, faite uniquement à titre d'exemple non limitatif, que la mise en place de l'anneau d'arrimage selon l'invention est très simple et ne nécessite aucun outil pour réaliser l'assemblage de la plaquette 8 sur l'élément d'anneau d'accrochage 6.

## Revendications

1. Agencement d'anneau d'arrimage sur une structure de support telles que le bord de rive ou un plancher notamment de chargement d'un véhicule de transport, dans lequel l'anneau est retenu dans la structure de support par sa partie opposée à la partie d'accrochage d'un moyen d'arrimage tels qu'une sangle ou une chaîne, l'anneau d'arrimage (1) comporte un élément d'accrochage (6) en forme d'un U ayant des branches (11) dont les extrémités libres (10) passent à travers des trous pratiqués dans une partie (4) de la structure de support (3), et un élément de liaison (8) des deux extrémités (10), l'élément (8) de liaison comprenant une plaquette adaptée pour être placée sur les branches (11), du côté des extrémités (10) ayant traversé la partie (4) de la structure de support et comportant pour chaque extrémité (10) de l'élément d'accrochage (6) une échancrure de retenue (20) de la plaquette sur les extrémités (10), **caractérisé en ce que** des moyens de verrouillage (31, 50, 72) sont disposés sur lesdites extrémités (10) empêchant une désolidarisation de l'élément d'accrochage (6) et de la plaquette, la plaquette étant pourvue desdits moyens de verrouillage (31, 50, 72) immobilisant sensiblement la plaquette sur les extrémités (10), les moyens de verrouillage (31, 50, 72) étant mobiles entre une position de verrouillage sur l'une des extrémités (10) et une position permettant le montage de l'élément (8) de liaison sur les extrémités (10).

2. Agencement selon la revendication 1, **caractérisé en ce que** l'extrémité (10) de chaque branche de l'élément d'accrochage (6) se termine par une partie en forme d'une tête (22) et une partie d'épaisseur réduite (25) devant la tête et **en ce que** chaque échancrure (20) comprend une partie (27) permettant le passage de la tête (22) et, en communication avec cette partie, une portion oblongue (29) de réception et de retenue de la partie d'épaisseur réduite (25) de l'extrémité (10) et **en ce que** les moyens de verrouillage sont configurés pour bloquer l'extrémité (10) dans la partie d'échancrure oblongue (29).

3. Agencement selon l'une des revendications 1 ou 2, **caractérisé en ce que** le moyen de verrouillage (31, 50, 72) comprend un élément de butée latérale (38, 69, 77) de l'extrémité (10) d'une branche de l'élément d'accrochage (6), ayant traversé son échancrure (20), pour empêcher le retour de cette extrémité (10) dans la partie de passage (27) de la tête (22).

4. Agencement selon la revendication 3, **caractérisé en ce que** le moyen de verrouillage est formé par une épingle (33) montée sur la plaquette (8) par une extrémité, pivotant contre une force de rappel, entre la position de verrouillage de la tête (22) et la position permettant le passage de cette tête à travers la partie de passage (27) de l'échancrure (20) et le passage par un mouvement en translation latérale de la partie d'épaisseur réduite (25) de l'extrémité (10) dans la partie d'échancrure oblongue (29), la butée (38) étant formée par l'extrémité libre de l'épingle.

5. Agencement selon la revendication 4, **caractérisé en ce que** les moyens de verrouillage sont formés par une épingle bistable (50), adaptée pour pivoter entre sa position de verrouillage et sa position permettant le passage de la tête (22) à verrouiller.

6. Agencement selon la revendication 3 **caractérisé en ce que** les moyens de verrouillage sont formés par une lame élastiquement déformable (72), qui est montée pivotante entre sa position de verrouillage et la position permettant le passage de la tête (22) à verrouiller à travers la portion de passage (27) de l'échancrure (20), cette lame étant montée fixe sur la plaquette, par une extrémité, tandis que l'autre extrémité comporte l'élément de butée latérale (77).

## Patentansprüche

1. Ringförmige Festzurranordnung auf einer Haltestruktur wie die Einfassung oder ein Boden insbesondere zum Beladen eines Transportfahrzeugs, wobei der Ring in der Haltestruktur durch seinen Teil gehalten wird, welcher dem Anschlagteil eines Festzurrmittels wie ein Gurt oder eine Kette gegenüberliegt, wobei der Festzurrring (1) ein Anschlagelement (6) in U-Form mit Schenkeln (11) aufweist, deren freie Enden (10) durch Löcher verlaufen, die in einen Teil (4) der Haltestruktur (3) eingearbeitet sind, und ein Verbindungselement (8) der zwei Enden (10), wobei das Verbindungselement (8) eine Platte umfasst, die zum Platzieren auf den Schenkeln (11) auf der Seite der Enden (10), welche den Teil (4) der Haltestruktur durchquert haben, geeignet ist, und für jedes Ende (10) des Anschlagelements (6) einen Halteausschnitt (20) der Platte auf den Enden (10) aufweist, **dadurch gekennzeichnet, dass** Verriegelungsmittel (31, 50, 72) über den Enden (10) angeordnet sind, die ein Trennen des Anschlagelements (6) und der Platte verhindern, wobei die Platte mit Verriegelungsmitteln (31, 50, 72) versehen ist, welche die Platte auf den Enden (10) etwa blockieren, wobei die Verriegelungsmittel (31, 50, 72) zwischen einer Verriegelungsposition über einem der Enden (10) und einer Position beweglich sind, welche die Montage des Verbindungselements (8) über den Enden (10) erlaubt.

2. Anordnung nach Anspruch 1, **dadurch gekennzeichnet, dass** das Ende (10) jedes Schenkels des Anschlagelements (6) als ein Teil in Form eines Kopfs (22) und ein Teil verringerter Stärke (25) vor dem Kopf endet und dass jeder Ausschnitt (20) einen Teil (27) umfasst, der den Durchgang des Kopfs (22) erlaubt, und in Kommunikation mit diesem Teil einen länglichen Aufnahme- und Halteabschnitt (29) des Teils verringerter Stärke (25) des Endes (10) und dass die Verriegelungsmittel konfiguriert sind, um das Ende (10) im länglichen Ausschnittteil (29) zu blockieren.

3. Anordnung nach einem der Ansprüche 1 oder 2, **dadurch gekennzeichnet, dass** das Verriegelungsmittel (31, 50, 72) ein längliches Endlagenelement (38, 69, 77) des Endes (10) eines Schenkels des Anschlagelements (6) nach Durchquerung seines Ausschnitts (20) umfasst, um die Rückkehr dieses Endes (10) in den Durchgangsteil (27) des Kopfs (22) zu verhindern.

4. Anordnung nach Anspruch 3, **dadurch gekennzeichnet, dass** das Verriegelungsmittel von einer auf der Platte (8) mit einem Ende angebrachten Nadel (33) gebildet ist, die gegen eine Rückstellkraft zwischen der Verriegelungsposition des Kopfs (22) und der Position schwenkt, welche den Durchgang dieses Kopfs durch den Durchgangsteil (27) des Ausschnitts (20) erlaubt, und den Durchgang mittels einer seitlichen Translationsbewegung des Teils verringerter Stärke (25) des Endes (10) im länglichen Ausschnittteil (29), wobei das Endlager (38) vom freien Ende der Nadel gebildet ist.

5. Anordnung nach Anspruch 4, **dadurch gekennzeichnet, dass** die Verriegelungsmittel von einer bistabilen Nadel (50) gebildet sind, die zum Schwenken zwischen ihrer Verriegelungsposition und ihrer Position, welche den Durchgang des zu verriegelnden Kopfs (22) erlaubt, geeignet ist.

6. Anordnung nach Anspruch 3, **dadurch gekennzeichnet, dass** die Verriegelungsmittel von eine elastisch verformbaren Lamelle (72) gebildet sind, die zwischen ihrer Verriegelungsposition und der Position, welche den Durchgang des zu verriegelnden Kopfs (22) durch den Durchgangsabschnitt (27) des Ausschnitts (20) erlaubt, schwenkend angebracht ist, wobei diese Lamelle mit einem Ende fest auf der Platte angebracht ist, wohingegen das andere Ende das seitliche Endlagenelement (77) aufweist.

## Claims

1. An arrangement of a securing ring on a support structure such as the bank edge or a floor, in particular for loading a transport vehicle, wherein the ring is retained on the support structure by its part opposite the part for attaching a securing means such as a strap or chain, the securing ring (1) includes an attachment element (6) in the shape of a U having branches (11) whereof the free ends (10) pass through holes formed in a part (4) of the support structure (3) and a connecting element (8) connecting the two ends (10), the connecting element (8) comprising a plate suitable for being placed on the branches (11), on the side of the ends (10) having passed through the part (4) of the support structure and including, for each end (10) of the attachment element (6), a retaining indentation (20) for retaining the plate on the ends (10), **characterized in that** locking means (31, 50, 72) are placed on said ends (10) preventing separation of the attachment element (6) and the plate, the plate being provided with said locking means (31, 50, 72) substantially immobilizing the plate on the ends (10), the locking means (31, 50, 72) being movable between a locked position on one of the ends (10) and a position making it possible to assemble the connecting element (8) on the ends (10) .

2. The arrangement according to claim 1, **characterized in that** the end (10) of each branch of the attachment element (6) ends with a part in the shape of a head (22) and a thinner part (25) in front of the head and **in that** each indentation (20) comprises a part (27) allowing the passage of the head (22) and, in communication with this part, an oblong portion (29) for receiving and retaining the thinner part (25) of the end (10) and **in that** the locking means are configured to block the end (10) in the oblong indentation part (29).

3. The arrangement according to one of claims 1 or 2, **characterized in that** the locking means (31, 50, 72) comprises a lateral stop element (38, 69, 77) of the end (10) of a branch of the attachment element (6), having passed through its indentation (20), to prevent this end (10) from returning into the passage part (27) of the head (22).

4. The arrangement according to claim 3, **characterized in that** the locking means is formed by a pin (33) mounted on the plate (8) by one end, pivoting against a return force, between the locking position of the head (22) and the position allowing the passage of this head through the passage part (27) of the indentation (20) and the passage by a lateral translational movement of the thinner part (25) of the end (10) and the oblong indentation part (29), the stop (38) being formed by the free end of the pin.

5. The arrangement according to claim 4, **characterized in that** the locking means are formed by a bistable pin (50), suitable for pivoting between its locked position and its position allowing the passage of the head (22) to be locked.

6. The arrangement according to claim 3, **characterized in that** the locking means are formed by a resiliently deformable blade (72), which is mounted pivoting between its locked position and the position allowing the passage of the head (22) to be locked through the passage portion (27) of the indentation (20), this blade being mounted stationary on the plate, by one end, while the other end includes the lateral stop element (77) .
